# EUROPÄISCHE PATENTSCHRIFT

(11) **EP 1 495 913 B1**
(45) Veröffentlichungstag und Bekanntmachung des Hinweises auf die Patenterteilung: **03.01.2007**
(21) Anmeldenummer: 03015329.0
(22) Anmeldetag: 07.07.2003
(51) Int. Cl.: B60R 7/02

(54) **Vorrichtung zum Sichern von Fracht oder Gepäck in einem Fahrzeug**
Device for securing loads and luggage in a vehicle
Dispositif de fixation pour chargements et bagages dans un véhicule

(43) Veröffentlichungstag der Anmeldung: 12.01.2005
(73) Patentinhaber: von Büren, Martin, 4512 Bellach (CH); Probst, Jean-Claude, 2544 Bettlach (CH)
(72) Erfinder: von Büren, Martin, 4512 Bellach (CH); Probst, Jean-Claude, 2544 Bettlach (CH)
(74) Vertreter: Andres, Angelika Maria

(56) Entgegenhaltungen:
- WO-A-00/00366
- DE-A- 19 633 032
- DE-U- 20 004 483
- DE-U- 29 711 979
- US-A- 5 788 310

## Beschreibung

Die Erfindung betrifft eine Vorrichtung zum Sichern von Fracht oder Gepäck in einem Fahrzeug. Ziel der Erfindung ist es, eine Vorrichtung zum Sichern verschiedener Arten von Gepäck in einem Fracht- oder Gepäckraum z. B. eines Kraftfahrzeugs zu schaffen.

Kraftfahrzeuge, z. B. Personenkraftwagen, besitzen üblicherweise einen Gepäckraum, der zum Verstauen von unterschiedlichen Arten von Gepäck dient. Bei konventionellen Kraftfahrzeugen besteht die Gefahr, dass das Gepäck in einem solchen Gepäckraum nur wenig oder gar nicht gesichert wird. Dies kann dazu führen, dass sich das Gepäck in dem Gepäckraum vor und zurück bewegt, wobei es beschädigt wird, was insbesondere im Falle eines plötzlichen Brems- oder Ausweichmanövers oder bei schnellen Kurvenfahrten auftreten kann.

Ungenügend gesichertes Gepäck stellt ein Risiko für die Fahrzeuginsassen dar. Aus diesem Grund besteht ein Bedürfnis nach einer Vorrichtung, welche unterschiedliche Arten von Fracht oder Gepäck in einem Fracht- oder Gepäckraum sichert.

Aus der US-PS 5, 788,310, die als nächstliegender Stand der Technik angesehen wird, ist eine Vorrichtung bekannt geworden, die verhindern soll, dass sich die Ladung auf der Ladefläche eines Pickups bewegen kann. Die Vorrichtung besteht aus einer Unterlage, die an die Ladefläche des Pickups angepasst ist. An der Oberseite der Unterlage sind mehrere senkrecht angeordnete Ausnehmungen vorgesehen. In diesen Ausnehmungen können Stifte so angeordnet werden, dass ein auf der Unterlage befindliches Gepäckstück rutschfest auf der Unterlage positioniert werden kann. Weiterhin ist am Rand der Unterlage eine Box fest montiert, in der im Bedarfsfall nicht benötigte Stifte abgelegt werden können.

In der DE 297 11 979 wird eine Vorrichtung zur Verhinderung des Verrutschens und/oder des Umkippens von Ladegut beim Transport in Kraftfahrzeugen vorgestellt. Die an einer Unterlage einsteckbaren Halteelemente und Transportboxen weisen jeweils eine Vielzahl von 'Steckfüßen' bzw. Erhebungen auf, wobei das Muster dieser Erhebungen an den Halteelementen und Transportboxen jeweils auf das Muster der Vertiefungen in der Grundplatte abgestimmt ist.

Der Zweck der vorliegenden Erfindung besteht darin, die oben bezeichneten Probleme zu lösen und eine Vorrichtung zum Sichern von Fracht in einem Frachtraum eines Fahrzeugs zu schaffen, die bei einem einfachen Aufbau das Gepäck sicher hält und sehr einfach und schnell zu handhaben ist.

Diese Aufgabe wird durch eine Vorrichtung der eingangs genannten Art mit den in Anspruch 1 genannten Merkmalen gelöst.

Die Erfindung beinhaltet eine Grundplatte oder mehrere miteinander verbundene Platten, die auf dem Boden des Fracht- oder Gepäckraumes mit oder ohne zusätzliche Befestigung angeordnet ist bzw. sind. Die Grundplatte, die einteilig ausgeführt ist oder sich aus mehreren Teilelementen zusammensetzt, weist bevorzugt ein regelmässiges Lochmuster auf, wobei die Lochungen bevorzugt zur im wesentlichen senkrechten Aufnahme von Fixierungselementen dienen. Die Erfindung beinhaltet desweiteren eine Vorrichtung zur Aufnahme und Unterbringung der nicht benötigten Fixierungselemente. Diese Vorrichtung ist bevorzugt so ausgestaltet, dass sie gleichzeitig zur Aufnahme der Fixierungselemente und zur Sicherung von Fracht und Gepäck verwendet werden kann. Mit anderen Worten: Die Fixierungselemente sind gleichzeitig als Aufnahmevorrichtungen für Fixierungselemente ausgestaltet.

Gemäss einer vorteilhaften Weiterbildung der erfindungsgemässen Vorrichtung ist die Grundplatte oder der Verbund von mehreren Platten parallel zum Boden des Lade-, Fracht- oder Gepäckraums angeordnet. Weiterhin wird erfindungsgemäß vorgeschlagen, zumindest der Unterseite der einteiligen oder aus mehreren verbundenen Teilen gebildeten Grundplatte eine verwindungssteife Wabenstruktur zu geben. Bevorzugt sind dann die Lochungen in den Eckbereichen der Waben vorgesehen. Es versteht sich von selbst, dass auch andere verstärkende Strukturen der Grundplatte in Verbindung mit der erfindungsgemässen Lösung einsetzbar sind.

Weiterhin wird vorgeschlagen, die Fixierungselement-Aufnahmevorrichtungen auf der Innenseite so zu wölben bzw. so auszugestalten, dass pro Aufnahmevorrichtung mehrere Fixierungselemente - bevorzugt vier Fixierungselemente - bevorzugt rutschfest in der Aufnahmevorrichtung aufbewahrt werden können. Um die problemlose Entnahme von Fixierungselementen aus den Aufnahmevorrichtungen zu gewährleisten, ist vorgesehen, dass die Fixierungselement-Aufnahmevorrichtungen im oberen Bereich von zwei gegenüberliegenden Seiten eine Aussparung aufweisen. Bevorzugt hat die Aussparung eine halbrunde Form.

Darüber hinaus wird angeregt, dass die Fixierungseiement-Aufnahmeverrichtungen und/oder die Fixierungselemente jeweils einen Steckfuss aufweisen, der so geformt und dimensioniert ist, dass er in die korrespondierende, im wesentlichen senkrecht zur Grundplatte angeordnete Lochung einsteckbar ist. Der Steckfuss und/oder die Lochung können einen beliebigen Querschnitt aufweisen. Beispielsweise ist er rund, rechteckig, vieleckig oder oval. Wichtig ist, dass ein Fixierungselement bzw. eine Aufnahmevorrichtung nach dem Einstecken in eine Lochung fest und stabil aber lösbar mit der Lochung verbunden ist.

Darüber hinaus wird vorgeschlagen, im Fahrzeug eine Aufnahme-Einheit vorzusehen, die es ermöglicht, die Fixierungselement-Aufnahmevorrichtungen in das Fahrzeug zu integrieren und dort bei Nichtgebrauch sicher zu verstauen.

Zwecks verbesserter und leichter Entnahme der Fixierungselemente aus der Fixierungselemente-Aufnahmevorrichtung sowie zur einfachen Verstellung der Fixierungselemente auf der Grundplatte sind an den Fixierungselementen Aussparungen oder Einbuchtungen vorgesehen. Diese sind beispielsweise rund, oval oder rechteckig.

Die Erfindung wird nachstehend anhand der Figuren näher beschrieben. Es zeigt:
Fig. 1: eine perspektivische Ansicht eines Gepäckraums eines Kraftfahrzeugs mit einer Ausgestaltung der erfindungsgemässen Vorrichtung;
Fig. 2: eine Detailansicht der Oberseite der Bodenplatte,
Fig. 3: eine Detailansicht der Unterseite der Bodenplatte,
Fig. 4: eine Detailansicht der Fixierungselement-Aufnahmevorrichtung und
Fig. 5: eine Detailansicht des Fixierungselementes.

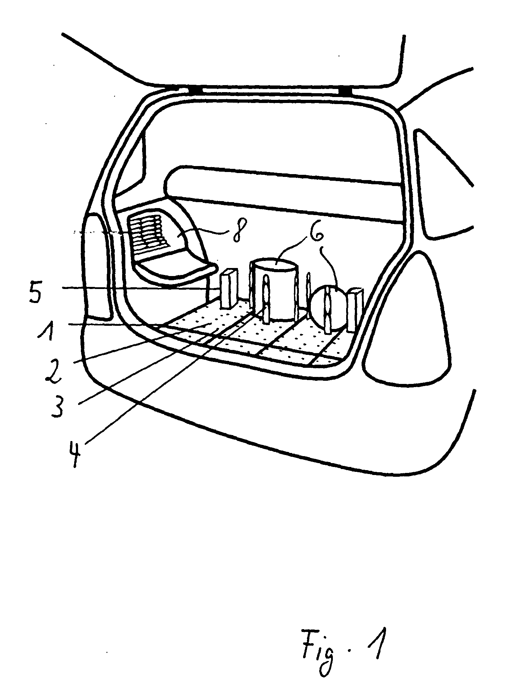

Fig. 1 zeigt eine perspektivische Ansicht einer bevorzugten Ausgestaltung der erfindungsgemässen Vorrichtung. Die Vorrichtung ist im Gepäckraum 1, im rückwärtigen Teil eines Kraftfahrzeugs üblicher Bauart angeordnet, z. B. einem Personen- oder Lieferwagen, Boot usw.. Das Fahrzeug weist eine Karosserie auf, die üblicherweise mit einem Fracht- oder Gepäckraum 1 ausgestattet ist.

Fig. 1 zeigt auch ein Gepäckstück 6 in Form einer Kiste, sowie ein Gepäckstück 7 in Form eines Eimers, die in dem Gepäckraum 1 gesichert werden. Zu diesem Zweck wurde das Gepäckstück in Kistenform 6 mit zwei Fixierungselement-Aufnahmevorrichtungen 5 sowie das Gepäckstück in Eimerform 7 mit drei einzelnen Fixierungselementen 4 gesichert. Die Handhabung wird erleichtert durch die jederzeit mögliche Entnahme von weiteren Fixierungselementen 4 aus den Aufnahmevorrichtungen 5, je nach Form des zu sichernden Gegenstandes.

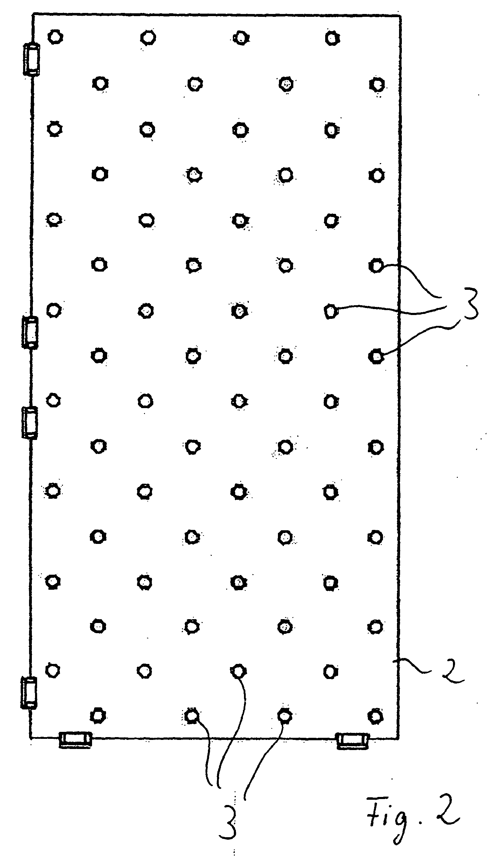

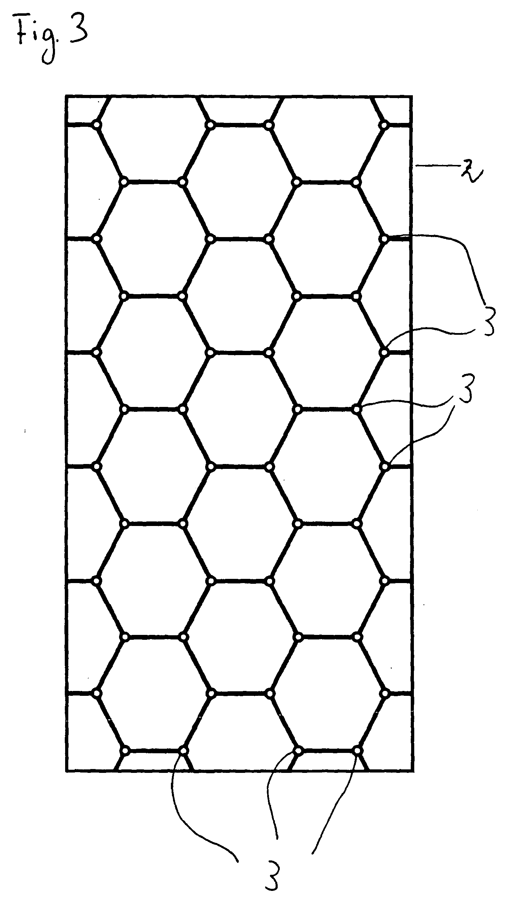

Fig. 2 zeigt eine Ansicht der Oberseite der Grundplatte 2. Die Platte 2 besteht beispielsweise aus einem beliebigen Kunststoffgemisch. Im gezeigten Fall ist die Platte 2 einteilig ausgeführt. Sie kann jedoch auch aus miteinander verbindbaren Teilelementen bestehe, mit denen sich eine gewünschte Form der Grundplatte 2 frei gestalten lässt. Die Oberfläche der Platte 2 weist eine beliebige rutschhemmende Struktur auf. Die Anordnung der Lochungen 3 ist im gezeigten Fall auf die wabenförmigen Struktur der Plattenunterseite abgestimmt. Diese Plattenunterseite ist in Fig. 3 gesondert dargestellt. Durch den wabenförmigen Aufbau der Plattenunterseite wird eine Verstärkung der Grundplatte 2 erreicht. Die Lochungen 3 sind zylindrisch gerade oder zylindrisch leicht konisch ausgelegt. Die Lochungen 3 können runder, rechteckiger oder vieleckiger Form sein. Die durchgehende Lochung gewährleistet eine einfache und schnelle Reinigung der erfindungsgemässen Vorrichtung.

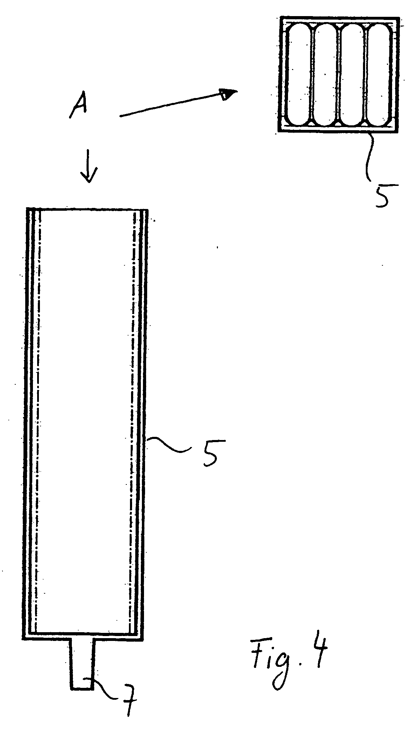

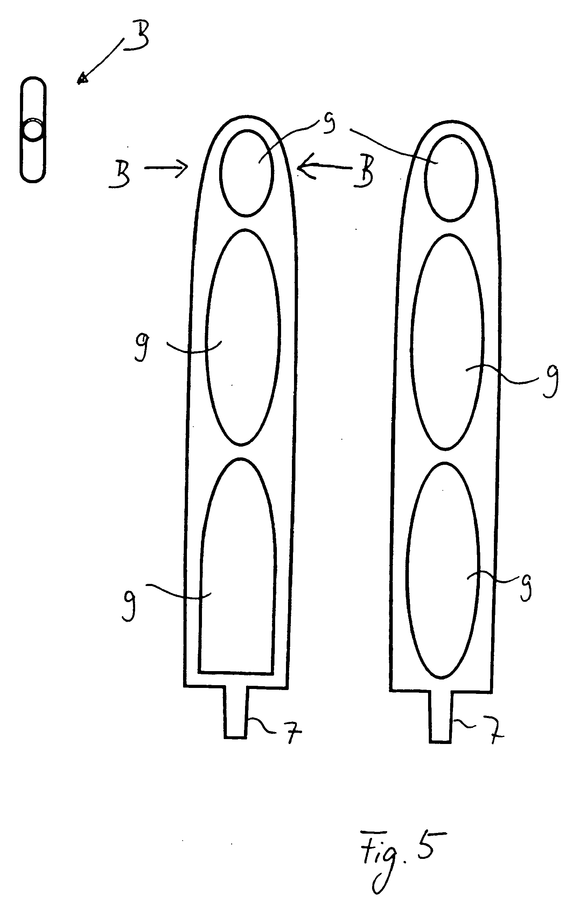

Fig. 3 zeigt - wie bereits gesagt - eine Ansicht der Unterseite der Grundplatte 2. Hier ist der wabenförmige Aufbau der Plattenverstärkung ersichtlich. Fig. 4 zeigt den Aufbau der Fixierungselement-Aufnahmevorrichtung 5, die in den Ansprüchen 4 und 5 beschrieben ist. Fig. 5 zeigt eine Ausgestaltung des Fixierungselements 3 gemäss Anspruch 9.

Unter erneuter Bezugnahme auf Fig. 1 ist es erkennbar, dass Gepäckstücke 6, 7 mit beliebiger Form, die in dem Gepäckraum 1 untergebracht sind, von dem Benutzer dadurch gesichert werden können, dass er aus den Fixierungselement-Aufnahmevorrichtungen 5 Fixierungselemente 4 ergreift und diese in genügender Anzahl um die Gepäckstücke 6, 7 herum anordnet. Bei Bedarf können die Fixierungselement-Aufnahmevorrichtungen 5 zusätzlich als Fixierungselemente 4 verwendet werden. Dies stellt eine besonders günstige Ausgestaltung der erfindungsgemässen Vorrichtung dar.

Die Erfindung ist nicht auf die vorgenannte Ausführungsform beschränkt, sondern kann innerhalb der Lehre der beigefügten Patentansprüche variiert werden. Die Erfindung kann beispielsweise in verschiedenen Kraftfahrzeugen, z. B. Personenwagen, Lastkraftwagen oder Bussen Verwendung finden.

Vorzugsweise wird der gesamte Fracht- oder Gepäckraum mit beliebig angeordneten, untereinander verbundenen Grundplatten 2 versehen.
Die Lochungen 3 können beispielsweise einen rechteckigen Querschnitt besitzen. In einem solchen Fall besitzen die Fixierungselemente 4 sowie die Fixierungselement-Aufnahmevorrichtungen 5 ebenfalls einen rechteckigen bzw. passenden Querschnitt. Allgemein gesprochen, müssen die Querschnitte der Lochungen 3 mit den Querschnitten der Fixierungselemente 4 bzw. ggf. mit den Querschnitten der Fixierungselement-Aufnahmevorrichtungen 5 korrespondieren.

## Patentansprüche

1. Vorrichtung zum Sichern von Fracht oder Gepäck gegen Verrutschen und/oder Kippen in einem Lade-/ Fracht- oder Gepäckraum (1) eines Fahrzeugs mit einer Grundplatte (2) oder mehreren untereinander verbindbaren Grundplatten (2), die Lochungen (3) aufweist/aufweisen, und mit Fixierungselementen (4) und Aufnahmevorrichtungen (5, 6) für Fixierungselemente (4),
wobei die Unterseite der einteiligen oder aus mehreren verbundenen Teilen gebildete Grundplatte (2) eine verwindungssteife Wabenstruktur aufweist,
wobei die Lochungen (3) in den Eckbereichen der Wabenstruktur vorgesehen sind, wobei die Aufnahmevorrichtungen (5, 6) und die Fixierungselemente (4) jeweils einen Steckfuß (7) aufweisen, der so geformt und dimensioniert ist, dass er in eine beliebige korrespondierende, im wesentlichen senkrecht zur Grundplatte (2) angeordnete Lochung (3) einsteckbar ist, und wobei die Aufnahmevorrichtung (5, 6) so ausgestaltet ist, dass sie als Haltevorrichtung für nichtbenötigte Fixierungselemente (4) einsetzbar ist.

2. Vorrichtung nach Anspruch 1,
**dadurch gekennzeichnet,**
**dass** die Grundplatte (2) oder ein Verbund von mehreren Grundplatten (2) parallel zum Boden des Lade-, Fracht- oder Gepäckraums (1) angeordnet ist.

3. Vorrichtung nach Anspruch 1,
**dadurch gekennzeichnet,**
**dass** die Aufnahmevorrichtungen (5) auf der Innenseite so gewölbt sind, dass pro Aufnahmevorrichtung (5) mehrere Fixierungselemente (4) Fixierungselemente (4) rutschfest aufbewahrt werden können.

4. Vorrichtung nach Anspruch 1 oder 3,
**dadurch gekennzeichnet,**
**dass** die Aufnahmevorrichtungen (5) im oberen Bereich von zwei gegenüberliegenden Seiten eine Aussparung aufweisen, die die problemlose Entnahme der Fixierungselemente (4) gewährleistet.

5. Vorrichtung nach Anspruch 1,
**dadurch gekennzeichnet,**
**dass** der Steckfuß (7) und die Lochung (3) einen runden, rechteckigen, einen vieleckigen oder einen ovalen Querschnitt aufweisen/aufweist.

6. Vorrichtung nach Anspruch 1,
**dadurch gekennzeichnet,**
**dass** eine in das Fahrzeug integrierete Aufnahme-Einheit (8) zur Aufbewahrung von nicht benötigten Fixierungselementen (4) oder steckbaren Aufnahmevorrichtungen (5) vorgesehen ist.

7. Vorrichtung nach Anspruch 1,
**dadurch gekennzeichnet,**
**dass** die Fixierungselemente (3) runde, ovale oder rechteckige Aussparungen zur besseren Entnahme aus der Aufnahmevorrichtung (5) sowie zur Verstellung in der Grundplatte (2) aufweisen.

## Claims

1. Unit to secure cargo or luggage against sliding and/or toppling over in a loading/cargo compartment or trunk (1) of a vehicle with a base plate (2) or several interconnectable base plates (2), which exhibit(s) openings, and with fixing elements (4) and holder units (5 and 6) for fixing elements (4) whereby the underside of the base plate (2), designed as a single unit or consisting of several interconnected parts, exhibits a torsion-resistant honeycomb structure, **characterized in that** the openings (3) are provided in the corner areas of the honeycomb structure and **in that** the holder units (5 and 6) and the fixing elements (4) each exhibit a plug-in foot (7) that is shaped and sized in such a way that it can be inserted into any corresponding opening (3), primarily arranged vertically to the base plate (2), and **in that** the holder unit (5 and 6) is designed in such a way that it can be used for storing fixing elements (4) that are not needed.

2. Unit as per Claim 1, **characterized in that** the base plate (2), or a network of several base plates (2), is arranged parallel to the floor of the loading/cargo compartment or trunk.

3. Unit as per Claim 1, **characterized in that** the inside of the holder units (5) is curved in such a way that several fixing elements (5) can be stored per holder unit (5) without slipping.

4. Unit as per Claim 1 or 3, **characterized in that** the holder units (5) exhibit a recess in the upper area of two opposing sides which ensures that the fixing elements can be easily removed.

5. Unit as per Claim 1, **characterized in that** the plug-in foot (7) and the opening (3) has/have a round, square, rectangular or oval cross-section.

6. Unit as per Claim 1, **characterized in that** a holder device (8) integrated into the vehicle is provided for storing fixing elements (4) or plug-in holder units (5) that are not needed.

7. Unit as per Claim 1, **characterized in that** the fixing elements (3) exhibit round, oval or square recesses for better removal from the holder unit (5) and for positioning in the base plate (2).

## Revendications

1. Dispositif destiné au calage d'un chargement ou de bagages afin d'empêcher leur glissement et/ou basculement dans une soute / cale ou dans un coffre à bagages (1) d'un véhicule, avec une plaque de base (2) ou plusieurs plaques de base (2) reliables entre elles, qui comporte(nt) des perforations (3), et avec des éléments de fixation (4) et des dispositifs de logement (5, 6) pour les éléments de fixation (4), le dessous de la plaque de base (2), constituée d'une seule pièce ou de plusieurs pièces reliées entre elles, présentant une structure en nid d'abeilles rigide à la torsion, les perforations (3) étant prévues dans les zones d'angles de la structure en nid d'abeilles, les dispositifs de logement (5, 6) et les éléments de fixation (4) présentant chacun une patte de fixation (7), qui est formée et dimensionnée de telle sorte qu'elle puisse être engagée dans une quelconque perforation (3) correspondante, disposée pour l'essentiel perpendiculairement à la plaque de base (2) et le dispositif de logement (5, 6) étant conçu de telle sorte à pouvoir être utilisé en tant que dispositif de maintien pour les éléments de fixation(4) inutilisés.

2. Dispositif selon la revendication 1,
**caractérisé en ce que**
la plaque de base (2) ou un assemblage de plusieurs plaques de base (2) est disposé(e) parallèlement au plancher de la cale, de la soute ou du coffre à bagages.

3. Dispositif selon la revendication 1,
**caractérisé en ce que**
la face intérieure des dispositifs de logement (5) est bombée de telle sorte à pouvoir ranger par dispositif de logement (5) plusieurs éléments de fixation (4), de façon antidérapante.

4. Dispositif selon la revendication 1 ou 3,
**caractérisé en ce que**
les dispositifs de logement (5) présentent, au niveau de deux faces opposées, un évidement qui garantit un prélèvement sans problème des éléments de fixation (4).

5. Dispositif selon la revendication 1,
**caractérisé en ce que**
la patte de fixation (7) et la perforation (3) présentent une section circulaire, rectangulaire, polygonale ou ovale.

6. Dispositif selon la revendication 1,
**caractérisé en ce qu'**
une unité de logement (8) intégrée dans le véhicule est prévue pour le rangement d'éléments de fixation (4) ou de dispositifs de logement (5) enfichables inutilisés.

7. Dispositif selon la revendication 1,
**caractérisé en ce que**
les éléments de fixation (3) comportent des évidements ronds, ovales ou rectangulaires pour un meilleur prélèvement du dispositif de logement (5) ainsi que pour le positionnement dans la plaque de base (2).
